# EUROPÄISCHE PATENTSCHRIFT

(11) **EP 0 868 246 B1**
(45) Veröffentlichungstag und Bekanntmachung des Hinweises auf die Patenterteilung: **02.06.1999**
(21) Anmeldenummer: 96943071.9
(22) Anmeldetag: 10.12.1996
(51) Int. Cl.: B23K 7/10

(54) **BRENNSCHNEIDMASCHINE MIT EINER WERKZEUGBEFESTIGUNGSEINRICHTUNG**
FLAME CUTTING MACHINE WITH TOOL FIXING DEVICE
MACHINE D'OXYDOCOUPAGE AVEC DISPOSITIF DE FIXATION D'OUTIL

(30) Priorität: 15.12.1995 DE 19546677
(43) Veröffentlichungstag der Anmeldung: 07.10.1998
(73) Patentinhaber: ESAB-HANCOCK GmbH, D-61184 Karben (DE)
(72) Erfinder: SCHÄFER, Rainer, D-35085 Ebsdorfergrund (DE)
(74) Vertreter: Schubert, Siegmar, Dipl.-Ing.
(86) Internationale Anmeldenummer: EP9605509
(87) Internationale Veröffentlichungsnummer: WO9722431

(56) Entgegenhaltungen:
- EP-A- 0 189 559
- EP-A- 0 312 861
- US-A- 3 779 533

## Beschreibung

Die Erfindung betrifft eine Brennschneidmaschine mit einer Werkzeugbefestigungseinrichtung nach dem Oberbegriff des Anspruchs 1 (siehe EP-A-312 861).

Unter der Werkzeugbefestigungseinrichtung wird eine Einrichtung verstanden, mit deren Hilfe an einen Brennerwagen herangereichte Werkzeugteile, insbesondere Düsen eines Plasmabrenners, weitgehend selbsttätig an dem Brennerwagen befestigt werden können.

Der Brennerwagen ist in üblicher Weise auf einem Maschinenkörper in Y-Richtung verfahrbar. Der Maschinenkörper läßt sich seinerseits dazu rechtwinklig in X-Richtung verfahren. Unter dem Ausdruck "betriebsmäßig" in dem Oberbegriff des Anspruchs 1 wird verstanden, daß diese Verfahrbewegungen des Brennerwagens und des Maschinenkörpers normalerweise zur Einstellung des Werkzeugs gegenüber einem Werkstück erfolgen, nicht aber zum Wechsel des Werkzeugs oder eines Werkzeugteils an dem Brennerwagen. Der in diesem Text verwendete Ausdruck Brennerwagen sowie der auch gebräuchliche Begriff Querwagen sind synonym.

Wenn nach dem Stand der Technik mit einer Brennschneidmaschine unterschiedliche Funktionen durchgeführt werden sollten, wie z.B. Schneiden mit einem Plasmabrenner, Signieren mit einem Signierwerkzeug oder Schneiden mit einem Autogenbrenner oder autogenes Schweißen, so wurde in der Regel der Brennerwagen an verschiedenen Stationen des Brennerwagens nebeneinander mit den erforderlichen Werkzeugen ausgerüstet, die dann je nach Betriebsart aktiviert wurden. Im übrigen wurden die Werkzeuge, wenn erforderlich als Ganzes ausgetauscht. Dieser manuell durchzuführende Austausch war aber umständlich und bedingte längere Standzeiten. Die permanente Anbringung verschiedener Werkzeuge an mehreren Stationen des Brennerwagens nebeneinander hat unter anderem den Nachteil, daß der Brennerwagen entsprechend breit und daher mit einer großen Masse behaftet sein muß, welche die Beschleunigungskräfte erhöht oder die Arbeitsgeschwindigkeit herabsetzt. Zudem ist die für alle Werkzeuge nutzbare Arbeitsbreite der Brennschneidmaschine eingeschränkt, da jeweils den Positionen der äußersten Stationen, die nicht örtlich zusammenfallen, Rechnung getragen werden muß.

Bei Plasmabrennern, deren Düse nur kurze Standzeiten haben und oft gewechselt werden müssen, ist es bereits bekannt, nicht den gesamten Plasmabrenner auszutauschen, sondern nur die Teile der Düse auszuwechseln, die tatsächlich verschleißen. Dazu muß der Brenner aber auseinandergenommen und wieder zusammengesetzt werden, was umständlich und zeitraubend ist. Bei derart zusammensetzbaren Plasmabrennern ist es auch bekannt, die auswechselbare Düse mit einer Schnittstelle auszustatten, über welche Schutzgas, Schneidgas, elektrische Ströme für Hauptlichtbogen und Pilotlichtbogen sowie Wasser für eine Injektion sowie eventuell vorgesehene Signalspannungen für einen Sicherheitskreis und für eine Codierung geführt werden können.

Der vorliegenden Erfindung liegt die Aufgabe zugrunde, eine Brennschneidmaschine mit unkomplizierten technischen Mitteln so auszubilden, daß eine Mehrfachfunktion der Maschine unter Erhalt der vollen Arbeitsbreite mit einem massearmen Brennerwagen durchgeführt werden kann. Der dazu vorgesehene Austausch von Werkzeugteilen soll rasch durchführbar sein. Der Werkzeugteilaustausch soll sich auch zum Austausch von Verschleißteilen, insbesondere Düsen von Plasmabrennern eignen.

Diese Aufgabe wird durch die Ausbildung der Brennschneidmaschine mit den in dem kennzeichnenden Teil des Anspruchs 1 angegebenen Merkmalen gelöst.

Nach dem erfindungsgemäßen Prinzip wird eine Wechseleinrichtung geschaffen, die im wesentlichen aus einer mit einer Abdeckung versehenen Werkzeugteilaufnahme mit mehreren Werkzeugteilaufnahmestationen und einer Verstellvorrichtung besteht, mit der die Werkzeugteilaufnahme aus einer staubgeschützten Stellung teilweise aus der Abdeckung heraus bewegt werden kann, damit ein ausgewähltes Werkzeugteil, insbesondere eine Düse, zur Entnahme mit einer Werkzeugteileinsteck- und -entnahmeeinrichtung offenliegt, und zwar so, daß das ausgewählte Werkzeugteil, welches in eine Werkzeugteilaufnahmestation der Werkzeugteilaufnahme eingesteckt ist, sich in einer vorbestimmten Position - vorzugsweise gleichachsig - zu einer Werkzeugteileinsteck- und -entnahmeeinrichtung befindet, die ebenfalls zu der Erfindung gehört. Bevor das ausgewählte, sich an einer fest vorgegebenen Position bezüglich der Werkzeugteileinsteck- und -entnahmeeinrichtung befindliche Werkzeugteil von diesem an das an dem Brennerwagen befestigte Werkzeug angesetzt werden kann, wird durch die Werkzeugbefestigungseinrichtung, die nicht zu der Erfindung gehört, das Werkzeugteil von dem Werkzeug an dem Brennerwagen gelöst, so daß dieses Werkzeugteil zunächst von der Werkzeugteileinsteck- und -entnahmeeinrichtung erfaßt und in eine leere Werkzeugteilaufnahmestation der Werkzeugteilaufnahme eingebracht werden kann. Dazu wird zunächst die Werkzeugteilaufnahme in eine Werkzeugteileinsteckposition gefahren. Nachdem der Werkzeugteilaustausch durch Entnahme des gewünschten Werkzeugteils und Befestigung an dem Werkzeugteil an dem Brennerwagen abgeschlossen ist, kann die Werkzeugteilaufnahme wieder vollständig in die Abdeckung eingeschoben werden, um die in die Werkzeugteilaufnahme eingeschobenen Werkzeugteile, insbesondere deren Schnittstellen, die sich vorzugsweise wegen eines einfachen Bewegungsvorgangs zu dem Werkzeug an dem Brennerwagen und Befestigung hieran auf der Oberseite des Werkzeugteils befinden, vor Staub zu schützen sind. Wie es sich aus dem voranstehend umrissenen Werkzeugteilaustausch ergibt, hat die Werkzeugteilaufnahme wenigstens eine Werkzeugteilaufnahmestation mehr als die Anzahl der in einer Gruppe enthaltenen austauschbaren Werkzeugteile, die in der Werkzeugteilaufnahme bereitgehalten werden. Wenn mit der Brennschneidmaschine unterschiedliche Werkzeuge an einer Wagenstation des Brennerwagens betrieben werden sollen, sind die Werkzeugteile einer Gruppe, die in die Werkzeugteilaufnahme eingesteckt ist, unterschiedlich. Insoweit nur für einen Austausch eines dem Verschleiß unterworfenen Werkzeugteils, insbesondere einer Düse eines Brenners an dem Brennerwagen gesorgt werden soll, können die Werkzeugteile, d.h. Düsen untereinander gleich sein, die in der Werkzeugteilaufnahme vorgehalten werden.

Eine besonders zweckmäßige Ausführungsform der Erfindung zeichnet sich nach Anspruch 2 dadurch aus, daß die Werkzeugteilaufnahme ein schubladenförmiges Teil mit einer Reihe von Bohrungen in einem Boden des schubladenförmigen Teils als Werkzeugteilaufnahmestationen ist, welches bezüglich einer haubenförmigen Abdeckung horizontal verschiebbar ist, und daß das schubladenförmige Teil mit einer Linearverstelleinrichtung verbunden ist. Diese Gestaltung ist unkompliziert, gewährleistet aber durch die haubenförmige Abdeckung einen guten Staubschutz in der geschlossenen Stellung, in welcher die Werkzeugteilaufnahme mit den darin eingesteckten Werkzeugteilen durch die haubenförmige Abdeckung abgedeckt ist. Die Linearverstelleinrichtung dient dazu, die Werkzeugteilaufnahme aus der geschlossenen Stellung in eine Werkzeugteilwechselstellung zu fahren, womit die Werkzeugteilaufnahmestation mit dem als nächstes einzusetzenden Werkzeugteil ausgewählt wird.

Als Werkzeugteileinsteck- und -entnahmeeinrichtung ist gemäß Anspruch 3 unter der einstellbaren Werkzeugteilaufnahme ein Hubzylinder gegenüber der Werkzeugteilaufnahme fest dergestalt angeordnet, daß sich eine ausgewählte Werkzeugteilaufnahmestation gleichachsig über dem Hubzylinder befindet. Damit wird eine sichere Entnahme des Werkzeugteils aus der Werkzeugteilaufnahme gewährleistet. Gleiches gilt sinngemäß für das Zurückführen eines von dem Werkzeug an dem Brennerwagen gelösten Werkzeugteils in eine leere Werkzeugteileinsteckposition der Werkzeugteilaufnahme.

Bevorzugt weist das schubladenförmige Teil eine waagerechte Abdeckfläche auf, welche den Hubzylinder in der mit der Abdeckhaube geschlossenen Stellung abdeckt. Dadurch kann das Volumen der Abdeckhaube sowie der Werkzeugteilaufnahme gering gehalten werden, ebenso deren Masse. Trotzdem wird ein guter Staubschutz des Hubzylinders erreicht.

Der Staubschutz des Volumens, welches sich unter der haubenförmigen Abdeckung über der Werkzeugteilaufnahme in dem geschlossenen Zustand befindet, wird komplettiert durch eine vordere Stirnwand des schubladenförmigen Teils, wobei sich die genannte Abdeckfläche noch vor der Stirnwand befindet. Der Stirnwand des schubladenförmigen Teils kann eine entsprechende äußere Stirnwand der haubenförmigen Abdeckung gegenüberstehen, die also nicht mit dem schubladenförmigen Teil mitzubewegen ist.

Vorteilhaft ist nach Anspruch 6 zumindest ein Teil der Linearverstellungseinrichtung in einem durch die Abdeckung abdeckbaren Bereich des schubladenförmigen Teils untergebracht. Damit ist auch dieser Teil der Linearverstelleinrichtung in dem geschlossenen Zustand der Werkzeugteilaufnahme vor Staub geschützt. Bei diesem Teil der Linearverstelleinrichtung kann es sich um einen Hubzylinder handeln oder aber um eine Zahnstange, in welche ein Ritzel eines Motors eingreift.

In einer Variante sind der Werkzeugspeicher, nämlichdie Werkzeugaufnahme, deren Abdeckung und Verstelleinrichtung sowie die Werkzeugteileinsteck- und -entnahmeeinrichtung an dem Brennerwagen angebracht. In diesem Fall müssen die genannten Elemente zwar betriebsmäßig mit dem Brennerwagen mitbewegt werden, dafür braucht aber keine besondere Einstellbewegung durchgeführt zu werden, um den Brennerwagen mit der Wagenstation, an dem sich das Werkzeug befindet, in eine Wechselvorbereitungsposition zu fahren, in der sich die Wagenstation in einer bestimmten Stellung zu dem Werkzeugspeicher befindet.

In der Variante nach Anspruch 8 sind hingegen der Werkzeugspeicher, nämlich die Werkzeugaufnahme, deren Abdeckung und Verstelleinrichtung sowie die Werkzeugteileinsteck- und -entnahmeeinrichtung an dem Maschinenkörper angebracht, und es sind Mittel vorgesehen, um den Brennerwagen zum Werkzeugteilwechsel an dem Werkzeugspeicher in eine Wechselvorbereitungsposition gesteuert zu verfahren. Hier steht zur Anbringung der Werkzeugteilaufnahme und der mit ihr zusammenwirkenden Elemente mehr Raum zur Verfügung.

In der dritten Variante nach Anspruch 9 sind die Werkzeugteilaufnahme, deren Abdeckung und Verstelleinrichtung sowie die Werkzeugteileinsteck- und Entnahmeeinrichtung hingegen ortsfest angeordnet. Diese Anordnung unterliegt den geringsten räumlichen Einschränkungen. Dafür sind aber in der Regel Einstellbewegungen des Brennerwagens und des Maschinenkörpers durchzuführen, um eine Wechselvorbereitungsposition an dem Werkzeugspeicher zu erreichen.

Die in die Werkzeugteilaufnahme einsteckbaren und austauschbaren Werkzeugteile weisen nach Anspruch 10 jeweils eine universelle Schnittstelle auf. Die Universalität der Schnittstelle richtet sich danach, welche unterschiedlichen Werkzeugteilge an der Wagenstation des Brennerwagens vorzusehen sind. Die damit komplettierbaren Werkzeuge können insbesondere ein Plasmabrenner, ein Signierwerkzeug und ein Autogenbrenner sein. Wenn nur ein Plasmaprozeß durchzuführen ist, braucht die universelle Schnittstelle nur dazu eingerichtet zu sein, Schutzgas, Schneidgas, Ströme für Hauptlichtbogen und Pilotlichtbogen sowie Wasser zur Injektion zu übertragen. In dem Falle, in dem nur Autogenprozesse vorgesehen sind, braucht die universelle Schnittstelle nur Heizsauerstoff, Schneidsauerstoff und Brenngas zu übertragen. Hinzu kommen in beiden Fällen Kontakte für Signale, die zur Kodierung des Werkzeugteils nötig sind und die in einen Sicherheitskreis zu übertragen sind.

Die Erfindung wird im folgenden anhand einer Zeichnung mit fünf Figuren erläutert. Es zeigen:
- Fig. 1: eine erste Variante einer Anordnung eines Werkzeugteilspeichers / einer Werkzeugteilaufnahmestation bezüglich einer Brennschneidmaschine, wobei der Werkzeugteilspeicher ortsfest ist,
- Fig. 2: die Werkzeugteilaufnahme mit zugehörigen Elementen im geöffneten Zustand,
- Fig. 3: eine Einzelheit aus Fig. 2, nämlich eine Düse als austauschbares Werkzeugteil,
- Fig. 4: die Werkzeugteilaufnahme nach Fig. 2 im geschlossenen Zustand und
- Fig. 5: eine zweite Variante einer Anordnung eines Werkzeugteilspeichers / einer Werkzeugteilaufnahmestation bezüglich der Brennschneidmaschine, wobei der Werkzeugteilspeicher mit dem Maschinenkörper mitfahrend angeordnet ist.

In den Figuren tragen gleiche Teile übereinstimmende Bezugszeichen.

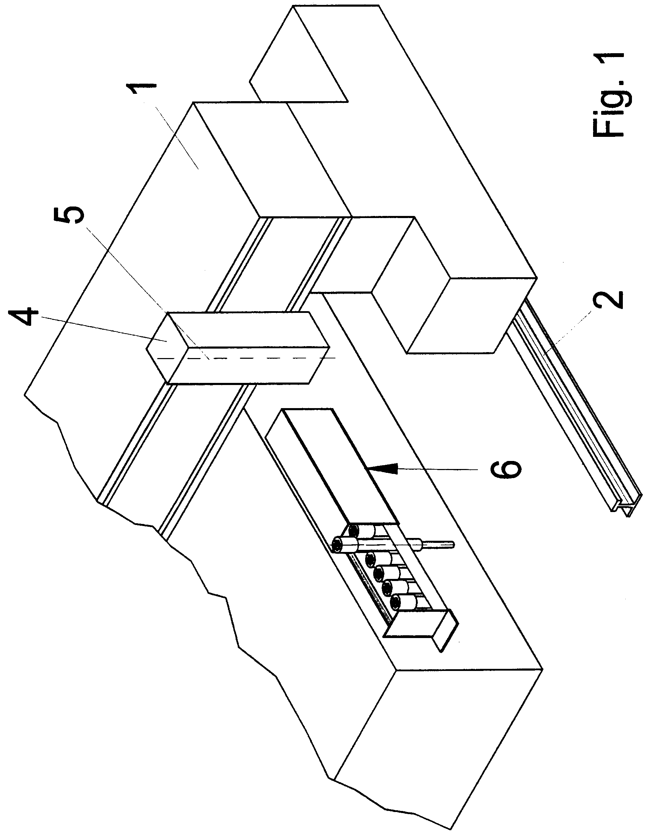

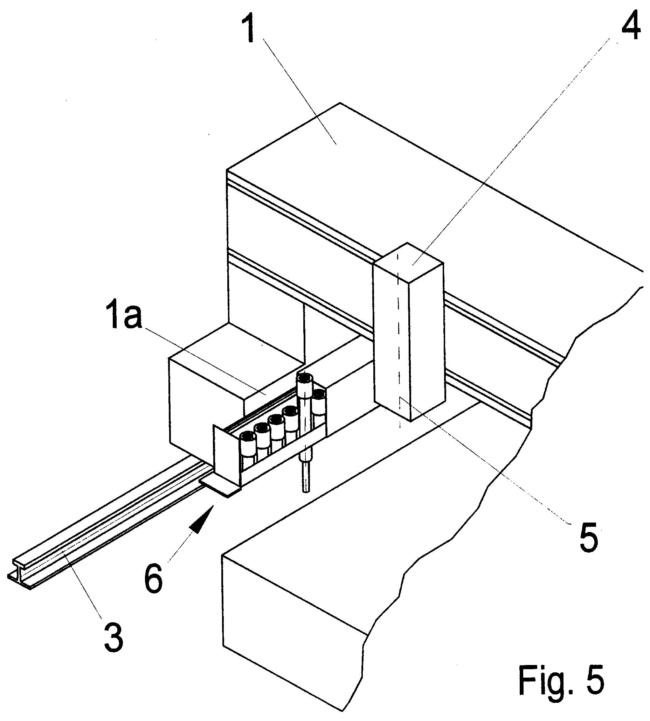

In Fig. 1 ist mit 1 ein ausschnittsweise dargestellter Maschinenkörper einer Brennschneidmaschine bezeichnet, der auf zwei Schienen in X-Richtung verfahrbar ist, von denen eine Schiene mit 2 bezeichnet ist. (Die andere Schiene 3 ist aus Fig. 5 ersichtlich.) Der Maschinenkörper 1 trägt einen in Y-Richtung verfahrbaren Brennerwagen 4. Eine einzige Wagenstation, an der ein Werkzeug angebracht werden kann, ist bei 5 angedeutet. An dieser Wagenstation 5 befindet sich auch eine im einzelnen nicht dargestellte Werkzeugbefestigungseinrichtung herkömmlicher Bauweise.

Ein Werkzeugteilspeicher 6, der als wesentliches Element eine Werkzeugteilaufnahme umfaßt, ist in der vorliegenden Ausführungsform gemäß Fig. 1 bezüglich des Maschinenkörpers 1 und des Brennerwagens 4 ortsfest an einem nicht bezeichneten Arbeitstisch angeordnet, und zwar an einer Position, daß die Wagenstation 5 über den Werkzeugteilspeicher eingestellt werden kann.

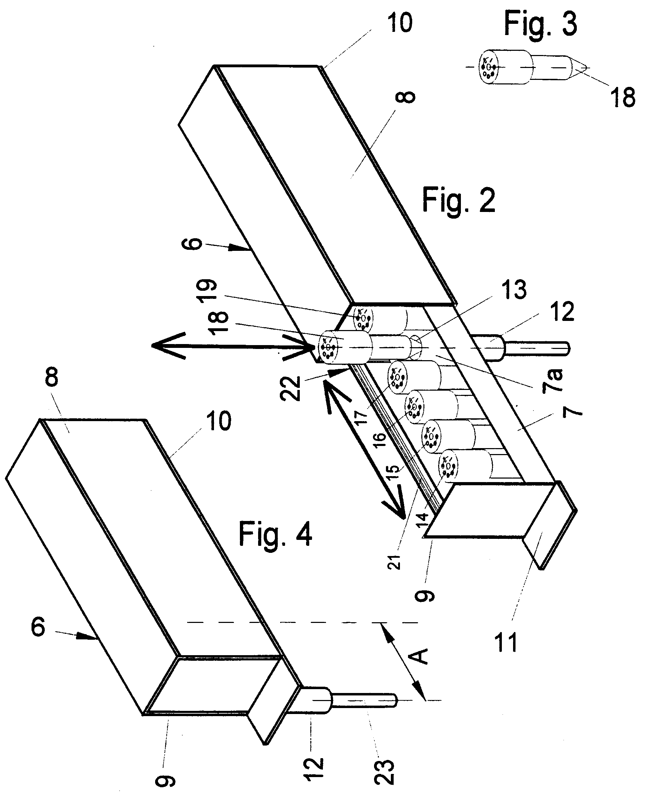

Einzelheiten des Werkzeugteilspeichers ergeben sich aus den Fig. 2 bis 4:

Danach umfaßt der Werkzeugteilspeicher ein schubladenförmiges Teil 7 als Werkzeugteilaufnahme sowie eine haubenförmige Abdeckung 8, aus der er wie in Fig. 2 dargestellt, herausgezogen werden kann. Das schubladenförmige Teil 7 weist eine vordere Stirnwand 9 auf, mit welcher die haubenförmige Abdeckung 8 vorne verschlossen werden kann. Die haubenförmige Abdeckung hat eine hintere Stirnwand, die der vorderen Stirnwand ähnlich ist, in der Zeichnung jedoch nicht ersichtlich ist und nicht bezeichnet ist, sowie einen Boden 10. Das schubladenförmige Teil 7 umfaßt weiterhin vor der vorderen Stirnwand eine Abdeckfläche 11, mit der ein vertikal ortsfest angeordneter Hubzylinder 12 im verschlossenen Zustand des schubladenförmigen Teils 7 abgedeckt werden kann, vgl. Fig. 4.

Das schubladenförmige Teil 7 umfaßt ebenfalls einen Boden 7a, aus dem eine Reihe von Bohrungen ausgenommen ist, von denen eine mit 13 bezeichnet ist. Die Bohrungen bilden Werkzeugteilaufnahmestationen für eine Reihe von Werkzeugteilen 14 bis 19. Die Werkzeugteile sind insbesondere als Düse ausgebildet, siehe das Werkzeugteil 18, welches in Fig. 3 gesondert herausgezeichnet ist.

Die Düsen als Werkzeugteile weisen auf ihrer Oberseite eine universelle Schnittstelle 20, siehe Fig. 3, auf, die in dem Falle, in dem es sich um eine Düse für einen Plasmaprozeß handelt, zur Überleitung eines Schutzgases, eines Schneidgases, von Wasser für Wasserinjektion, von Strömen für den Hauptlichtbogen und Pilotlichtbogen sowie für Kodierungs- und Sicherheitskreise eignet. In dem Falle, in dem die Düse für einen Autogenprozeß ausgebildet ist, umfaßt die universelle Schnittstelle Anschlüsse zur Leitung von Heizsauerstoff, Schneidsauerstoff, Brenngas sowie Kontakte für die Kodierungs- und Sicherheitskreise.

Wie es sich insbesondere aus den Fig. 2 und 4 ergibt, kann das schubladenförmige Teil 7 aus einer geschlossenen Stellung gemäß Fig. 4 in eine offene Stellung gemäß Fig. 2 verschoben werden, wozu eine Linearverstelleinrichtung 22 dient. In Fig. 2 ist ein Zylinder 21 als Teil einer solchen Linearverstelleinrichtung 22 angedeutet. Der Zylinder ist dabei so in dem schubladenförmigen Teil 7 angeordnet, daß er durch die haubenförmige Abdeckung 8 abgedeckt werden kann, also gegen Staub geschützt ist.

Mit der Linearverstelleinrichtung 22 wird das schubladenförmige Teil 7 nach Maßgabe einer nicht dargestellten Steuereinrichtung soweit aus der haubenförmigen Abdeckung 8 herausgezogen, daß sich eine ausgewählte Werkzeugteilaufnahmestation = Bohrung 13 über dem Hubzylinder 12 befindet. Der Abstand zwischen zwei Werkzeugteilaufnahmestationen bzw. einer Werkzeugteilaufnahmestation zu einer Mittelachse 23 des Hubzylinders ist in Fig. 4 mit A angedeutet. Dieser Abstand kann auch als Teilungsgröße bezeichnet werden.

Zum Wechseln eines Werkzeugteils wird das schubladenförmige Teil 7 zunächst soweit aus der haubenförmigen Abdeckung 8 herausgezogen, daß eine nicht besetzte Werkzeugteilaufnahmestation über dem Hubzylinder 12 liegt. Es kann in dieser Position ein von dem Werkzeug gelöstes Werkzeugteil an der Brennerstation 5, die über den Hubzylinder 12 gefahren ist, in die Werkzeugteilaufnahmestation, z.B. Bohrung 13, abgesenkt werden. Anschließend wird in einem auch als Wahlvorgang zu bezeichnenden Vorgang das schubladenförmige Teil mit dem für den nächsten Arbeitsgang gewünschten Werkzeugteil über den Hubzylinder 12 geschoben. Sodann wird das ausgewählte Werkzeugteil, z.B. die Düse 18, durch den Hubzylinder nach oben in die Befestigungsposition an dem Werkzeugteil, welches sich fest in der Wagenstation befindet, gedrückt. Die derart zusammengeführten Werkzeugteile werden durch die nicht dargestellte Werkzeugbefestigungseinrichtung fest miteinander verbunden, so daß das Werkzeug betriebsbereit ist. Das schubladenförmige Teil 7 wird anschließend zum Staubschutz in die haubenförmige Abdeckung 8 eingeschoben.

Die Anordnung des Werkzeugteilspeichers 6 gemäß Fig. 5 unterscheidet sich von derjenigen in Fig. 1 bei sonst grundsätzlich gleicher Ausbildung der Brennschneidmaschine. Gemäß Fig. 5 ist der Werkzeugteilspeicher 6 an einer Seitenwange 1a des Maschinenkörpers 1 mit diesem mitfahrend angebracht. Dem ist eine nicht dargestellte Steuerung des Brennerwagens zum Werkzeugteilwechsel anzupassen. Eine Positionierbewegung des Maschinenkörpers kann zu diesem Zweck entfallen.

Es hat sich herausgestellt, daß bei dieser Funktion des Werkzeugteilspeichers bzw. der Werkzeugteilaufnahme eine Genauigkeit erreichbar ist, die eine sichere Anbringung und ein sicheres Lösen an bzw. von dem Werkzeugteil an dem Brennerwagen mittels der herkömmlichen Werkzeugbefestigungseinrichtung gestattet.

## Patentansprüche

1. Brennschneidmaschine mit einer Werkzeugbefestigungseinrichtung, mit der ein austauschbares Werkzeugteil eines Werkzeugs, welches an einer Wagenstation (5) jeweils mindestens eines Brennerwagens (4) angebracht ist, insbesondere selbsttätig befestigbar ist, wobei der Brennerwagen (4) betriebsmäßig auf einem Maschinenkörper (1) verfahrbar ist, der seinerseits dazu rechtwinklig verfahrbar ist, und wobei eine Werkzeugteilaufnahme (7) mit mehreren Werkzeugteilaufnahmestationen dergestalt ausgebildet ist, daß sie zur vertikal verschiebbaren, einsteckbaren und entnehmbaren Lagerung einer Gruppe von austauschbaren Werkzeugteilen (14 bis 19) geeignet ist,
dadurch gekennzeichnet,
daß die Werkzeugteilaufnahme (7) mit einer Abdeckung (8) versehen ist, daß die Werkzeugteilaufnahme (7) mit einer Verstelleinrichtung (22) aus einer mit der Abdekkung (8) geschlossenen Stellung in eine geöffnete Werkzeugteilwechselstellung gesteuert einstellbar ist, so daß sich eine ausgewählte Werkzeugteilaufnahmestation in einer vorgegebenen Position bezüglich einer Werkzeugteileinsteck- und -entnahmeeinrichtung und dem Brennerwagen (4) befindet.

2. Brennschneidmaschine nach Anspruch 1,
**dadurch gekennzeichnet,**
daß die Werkzeugteilaufnahme (7) ein schubladenförmiges Teil mit einer Reihe von Bohrungen (13) in einem Boden (7a) des schubladenförmigen Teils als Werkzeugteilaufnahmestationen ist, welches bezüglich einer haubenförmigen Abdeckung (8) horizontal verschiebbar ist, und daß das schubladenförmige Teil mit einer Linearverstelleinrichtung (22) verbunden ist.

3. Brennschneidmaschine nach Anspruch 1 oder 2,
**dadurch gekennzeichnet,**
daß unter der einstellbaren Werkzeugteilaufnahme (7) ein Hubzylinder (12) als Werkzeugteileinsteck- und -entnahmeeinrichtung dieser gegenüber dergestalt fest angeordnet ist, daß sich eine ausgewählte Werkzeugteilaufnahmestation gleichachsig über dem Hubzylinder (12) befindet.

4. Brennschneidmaschine nach Anspruch 3,
**dadurch gekennzeichnet,**
daß das schubladenförmige Teil eine waagerechte Abdeckfläche (11) aufweist, welche den Hubzylinder (12) in mit der abdeckhaubenförmigen Abdeckung (8) geschlossenen Stellung abdeckt.

5. Brennschneidmaschine nach Anspruch 4,
**dadurch gekennzeichnet,**
daß das schubladenförmige Teil eine vordere Stirnwand (9) aufweist, vor der die Abdeckfläche (11) angeordnet ist.

6. Brennschneidmaschine nach einem der Ansprüche 2 bis 5,
**dadurch gekennzeichnet,**
daß zumindest ein Teil (21) der Linearverstelleinrichtung (22) in einem durch die Abdeckung (8) abdeckbaren Bereich des schubladenförmigen Teils untergebracht ist.

7. Brennschneidmaschine nach einem der vorangehenden Ansprüche,
**dadurch gekennzeichnet,**
daß ein Werkzeugspeicher (6), umfassend die Werkzeugteilaufnahme (7), deren Abdeckung (8) und Verstelleinrichtung (22) sowie die Werkzeugteileinsteck- und -entnahmeeinrichtung an dem Brennerwagen (4) angebracht sind.

8. Brennschneidmaschine nach einem der Ansprüche 1 bis 6,
**dadurch gekennzeichnet,**
daß ein Werkzeugspeicher (6), umfassend die Werkzeugteilaufnahme (7), deren Abdeckung (8) und Verstelleinrichtung (22) sowie die Werkzeugteileinsteck- und -entnahmeeinrichtung (12) an dem Maschinenkörper (1) angebracht sind und daß der Brennerwagen (4) zum Werkzeugteilwechsel in eine Wechselvorbereitungsposition an dem Werkzeugspeicher (6) gesteuert verfahrbar ist.

9. Brennschneidmaschine nach einem der Ansprüche 1 bis 6,
**dadurch gekennzeichnet,**
daß ein Werkzeugspeicher (6), umfassend die Werkzeugaufnahme (7), deren Abdeckung (8) und Verstelleinrichtung (22) sowie die Werkzeugteileinsteck- und -entnahmeeinrichtung (12) ortsfest angeordnet sind und daß der Brennerwagen (4) und der Maschinenkörper (1) zum Werkzeugteilwechsel bezüglich der Werkzeugaufnahme in eine Wechselvorbereitungsposition an dem Werkzeugspeicher (6) gesteuert verfahrbar sind.

10. Brennschneidmaschine nach einem der Ansprüche 1 bis 9,
**dadurch gekennzeichnet,**
daß die austauschbaren Werkzeugteile (18) jeweils eine universelle Schnittstelle (20) aufweisen.

## Claims

1. Flame cutting machine with a tool fixing device by means of which an exchangeable tool component of a tool mounted in a carriage holding position (5) of at least one torch carriage (4) can be fixed, in particular automatically, and in which the torch carriage (4) can be moved as necessary for operation on a machine body (1) which, for its part, can be moved at right-angles thereto, and having a tool component holder (7) comprising several tool component holding stations constructed such that a group of exchangeable tool components (14 to 19) can be moved vertically, accommodated by insertion therein and removed therefrom,
**characterized in that**
the tool component holder (7) is provided with a cover (8), and the tool component holder (7) can be moved in a controlled way from a position in which it is closed off by the cover (8) to an adjustable, open position allowing tool component exchange, so that a selected tool component holding station is brought to a predetermined position in relation to a tool component insertion and removal device and to the torch carriage (4).

2. Flame cutting machine according to Claim 1,
**characterized in that**
the tool component holder (7) is a drawer-like component with a series of holes (13) in a bottom (7a) of the drawer-like component, the said holes constituting tool component holding stations, and the said drawer-like component is connected to a linear displacement mechanism (22) so that it can be displaced horizontally relative to a hood-like cover (8).

3. Flame cutting machine according to Claims 1 or 2,
**characterized in that**
under the adjustable tool component holder (7) a lifting cylinder (12) is arranged in a fixed position as a tool component insertion and removal device, such that a selected tool component holding station is located coaxially above the lifting cylinder (12).

4. Flame cutting machine according to Claim 3,
**characterized in that**
the drawer-like component comprises a horizontal covering surface (11) which covers the lifting cylinder (12) in the position in which the drawer-like component is closed off by the hood-like cover (8).

5. Flame cutting machine according to Claim 4,
**characterized in that**
the drawer-like component Has a front end-wall (9) ahead of which the covering surface (11) is arranged.

6. Flame cutting machine according to any of Claims 2 to 5,
**characterized in that**
at least a part (21) of the linear displacement mechanism (22) is accommodated in an area of the drawer-like component that can be covered by the cover (8).

7. Flame cutting machine according to any of the preceding claims,
**characterized in that**
a tool magazine (6), comprising the tool component holder (7), its cover (8) and displacement mechanism (22) and the tool component insertion and removal device, are mounted on the torch carriage (4).

8. Flame cutting machine according to any of Claims 1 to 6,
**characterized in that**
a tool magazine (6), comprising the tool component holder (7), its cover (8) and displacement mechanism (22) and the tool component insertion and removal device (12) are mounted on the machine body (1), and to enable tool component exchange, the torch carriage (4) can be moved in a controlled way to a position over the tool magazine (6) preparatory for the exchange.

9. Flame cutting machine according to any of Claims 1 to 6,
**characterized in that**
a tool magazine (6), comprising the tool component holder (7), its cover (8) and displacement mechanism (22) and the tool component insertion and removal device (12) are located in a fixed position and, to enable tool component exchange, the torch carriage (4) and the machine body (1) can both be moved in a controlled way relative to the tool holder, to a position over the tool magazine (6) preparatory for the exchange.

10. Flame cutting machine according to any of Claims 1 to 9,
**characterized in that**
the exchangeable tool components (18) each comprise a universal connection interface (20).

## Revendications

1. Machine d'oxycoupage comportant un dispositif de fixation d'outil, à l'aide duquel peut être fixé, en particulier de façon automatique, un élément d'outil interchangeable d'un outil, qui est monté à un poste (5) d'au moins un chariot porte-chalumeau respectif (4), le chariot porte-chalumeau (4) étant alors déplaçable en service sur un bâti (1) de la machine, qui, de son côté, est déplaçable à angle droit par rapport au chariot porte-chalumeau, et un réceptacle d'éléments d'outil (7) qui comporte plusieurs postes de logement d'élément d'outil étant alors conçu d'une façon telle, qu'il soit adapté pour stocker un groupe d'éléments d'outil interchangeables (14 à 19) avec une possibilité de coulissement vertical, d'enfichage et d'enlèvement, caractérisée en ce que le réceptacle d'éléments d'outil (7) est pourvu d'un couvercle (8), en ce que le réceptacle d'éléments d'outil (7) peut, à partir d'une position fermée par le couvercle (8), être ajusté sous commande, à l'aide d'un dispositif de déplacement (22), dans une position ouverte de changement d'élément d'outil, de telle façon qu'un poste choisi de logement d'élément d'outil se trouve dans une position prédéfinie par rapport à un dispositif d'enfichage et d'enlèvement d'élément d'outil et par rapport au chariot porte-chalumeau (4).

2. Machine d'oxycoupage selon la revendication 1, caractérisée en ce que le réceptacle d'éléments d'outil (7) est un élément en forme de tiroir qui comporte, en tant que postes de logement d'élément d'outil, une rangée de trous (13) ménagés dans un fond (7a) de l'élément en forme de tiroir et qui peut coulisser horizontalement par rapport à un couvercle en forme de capot (8), et en ce que l'élément en forme de tiroir est relié à un dispositif de déplacement linéaire (22).

3. Machine d'oxycoupage selon la revendication 1 ou 2, caractérisée en ce qu'un vérin de levage (12), constituant le dispositif d'enfichage et d'enlèvement d'élément d'outil, est disposé sous le réceptacle d'éléments d'outil ajustable (7), dans une position fixe par rapport à ce dernier, ceci d'une façon telle qu'un poste choisi de logement d'élément d'outil se trouve au-dessus du vérin de levage (12) et sur le même axe que celui-ci.

4. Machine d'oxycoupage selon la revendication 3, caractérisée en ce que l'élément en forme de tiroir présente une surface de recouvrement horizontale (11) qui, dans la position fermée par le couvercle en forme de capot de recouvrement (8), couvre le vérin de levage (12).

5. Machine d'oxycoupage selon la revendication 4, caractérisée en ce que l'élément en forme de tiroir présente une paroi d'extrémité avant (9), en avant de laquelle est disposée la surface de recouvrement (11).

6. Machine d'oxycoupage selon l'une des revendications 2 à 5, caractérisée en ce qu'au moins une partie (21) du dispositif de déplacement linéaire (22) est logée dans une région de l'élément en forme de tiroir, qui peut être couverte par le couvercle (8).

7. Machine d'oxycoupage selon l'une des revendications précédentes, caractérisée en ce qu'un magasin d'outils (6), comprenant le réceptacle d'éléments d'outil (7), son couvercle (8) et son dispositif de déplacement (22), ainsi que le dispositif d'enfichage et d'enlèvement d'élément d'outil, sont montés sur le chariot porte-chalumeau (4).

8. Machine d'oxycoupage selon l'une des revendications 1 à 6, caractérisée en ce qu'un magasin d'outils (6), comprenant le réceptacle d'éléments d'outil (7), son couvercle (8) et son dispositif de déplacement (22), ainsi que le dispositif d'enfichage et d'enlèvement d'outil (12), sont montés sur le bâti (1) de la machine et en ce que le chariot porte-chalumeau (4), en vue du changement d'élément d'outil, peut être déplacé, sous commande, jusque dans une position de mise à disposition pour le changement, proche du magasin d'outils (6).

9. Machine d'oxycoupage selon l'une des revendications 1 à 6, caractérisée en ce qu'un magasin d'outils (6), comprenant le réceptacle d'outils (7), son couvercle (8) et son dispositif de déplacement (22), ainsi que le dispositif d'enfichage et d'enlèvement d'élément d'outil (12), sont disposés en un emplacement fixe et en ce que le chariot porte-chalumeau (4) et le bâti (1) de la machine, en vue du changement d'élément d'outil, peuvent être déplacés, sous commande, par rapport au réceptacle d'outils, jusque dans une position de mise à disposition pour le changement, proche du magasin d'outils (6).

10. Machine d'oxycoupage selon l'une des revendications 1 à 9, caractérisée en ce que les éléments d'outil interchangeables (18) présentent chacun une interface universelle (20).
